# EUROPEAN PATENT SPECIFICATION

(11) **EP 1 389 787 B1**
(45) Date of publication and mention of the grant of the patent: **14.11.2007**
(21) Application number: 03000431.1
(22) Date of filing: 10.01.2003
(51) Int. Cl.: H01H 3/60, H01H 13/70

(54) **Side button switch in mobile communication terminal and vibration preventing device thereof**
Druckknopf für mobiles Telekommunikationsgerät mit vibrationsverhindernder Vorrichtung
Bouton poussoir pour un système de communication mobile avec dispositif pour prévenir les oscillations

(30) Priority: 14.08.2002 KR 2002048071
(43) Date of publication of application: 18.02.2004
(73) Proprietor: LG ELECTRONICS INC., Seoul (KR)
(72) Inventor: Park, Min-Ho, Seoul (KR)
(74) Representative: Beyer, Andreas

(56) References cited:
- EP-A- 0 930 629
- DE-A- 3 721 513
- US-A- 2 981 816
- US-A- 3 382 338
- US-A- 4 066 851
- US-A- 4 278 861
- US-A- 4 937 932
- US-A- 5 028 752
- US-A- 6 148 183
- US-A1- 2002 079 210

## Description

The present invention relates to keypads, and more particularly to a keypad structure for inputting signals into electronic devices including but not limited to those having vibration motors.

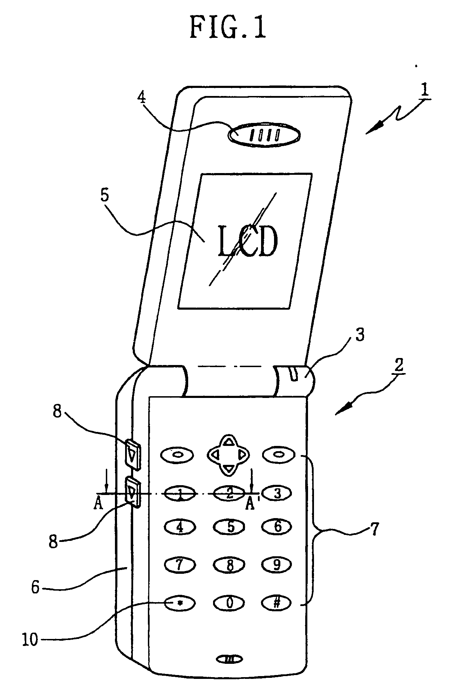

Figure 1 shows a folding-type mobile communication terminal of the related art. This terminal includes an upper part 1 and a lower part 2. A lower end of the upper part is hinge-coupled with an upper end of the lower part so as to turn within a predetermined range of angles. The terminal also includes a speakerphone 4 and a liquid crystal display screen 5 which displays characters and numbers. These elements are installed on a front part of a case of the upper part. Also included is a keypad 7 and side buttons 8. The keypad has a plurality of key buttons 10 formed thereon and is installed on a front part of a case 6 of the lower folding portion. The side buttons control the volume of the speakerphone and are installed at one lateral side of the case.

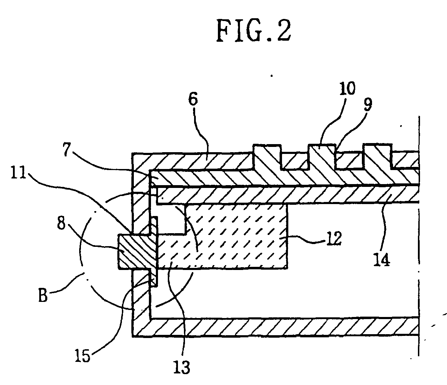

As shown in the enlarged view of Fig. 2, the keypad is mounted inside the case so that tops of key buttons 10 protrude out of the case through corresponding key button holes 9 formed on the front part of the case. Also, the side buttons are inserted through corresponding side button holes 11, so that top and bottom portions of the corresponding side buttons protrude from the side of the case.

The side buttons operate by activating a tact switch 12. As shown, a nose 13 of the tact switch contacts the bottom portion of the side button protruding inward into the case so as to support the side button 8. At another end, the tact switch is attached to a printed-circuit board 14 installed inside the case, so as to adhere closely to a rear face of the keypad. In operation, pressure is applied to nose 13 of the tact switch when a user presses a side button. A tact switch signal is then transferred to the printed-circuit board 14 in order to adjust the volume of the speaker phone.

This related-art terminal has a number of drawbacks. For example, a stroke of the nose of the tact switch is usually only 0.2 mm. If an assembly tolerance is + 0.2mm at a place where the side button is coupled with the case, then when the terminal is assembled the side button may push against a predetermined portion of the tact switch. As a result, the on/off operation of the tact switch 12 may be lost or at least adversely affected.

In order to overcome such a disadvantage, it has been proposed to couple the assembly of the side button with the case in such a manner that one face of the keypad is just in contact with the nose of the tact switch. While this approach may have some limited success, it is complicated to perform and thus significantly increases the assembly time of the terminal

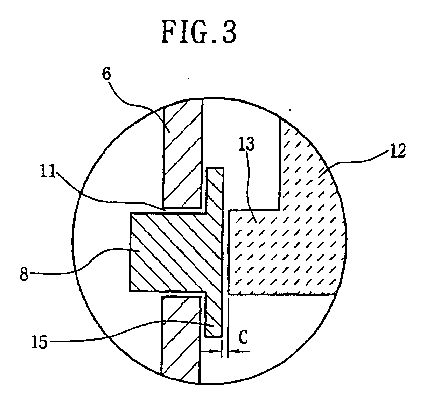

Fig. 3 shows an enlarged cross-sectional view of the mobile terminal of Fig. 2. In this view, side button 8 and tact switch 12 are coupled with case 6 and printed-circuit board 14 (not shown in this figure) so as to maintain an interval of 0.1 mm between the nose of the tact switch and the adjacent bottom of the side button.

This modification of the related art also has drawbacks. In this arrangement, the side button is not fixed to the side button hole 11, but rather is merely inserted into the side button hole for assembly. As a result, the side button may float and thus may be affected by a vibration motor which is activated in the terminal when a call is received. More specifically, the side button may collide with the nose of the tact switch when the variation motor is activated, thereby producing an undesirable noise. Moreover, if the interval between the bottom 15 of the side button and the nose 13 of the tact switch becomes greater than -0.2 mm by the assembly tolerance, the tact switch may fail to smoothly operate when the side button is pushed.

DE 37 21 513 A1 discloses an elastic damping pad for keyboards. According to this document, the pad will be generally placed between a button and a microswitch of the keyboard and serves to prevent dust, water and other impurities from entering into the operational section of the keyboard. The pad also provides a resilient force to reset the button into its initial position.

US 4,066,851 discloses a keyboard construction including a foldable sheet of flexible and resilient non-conductive material on which a plurality of conductive contacts are supported for forming switches.

Further, US 6,148,183 discloses a mobile telephone having a side switch assembly with actuator buttons and associated switches. No spacers are provided between the actuator buttons and the switches. The actuator buttons include plungers integrally formed therewith for excerting pressure on dome-shaped portions of the switches.

The present invention, according to claim 1, provides a terminal comprising a keypad, a switch separate from the keypad, and a button confronting the switch so as to operate the switch by a force excerted on the button. According to the invention, a spacer is connected to the keypad, which spacer extends between the button and the switch.

The present invention further provides, according to claim 16, a method for making a terminal, the method comprising the step of providing a case having at least one button. According to the invention, the method further comprises the steps of providing a keypad having connected thereto a spacer, placing the spacer between the button and a switch separate from the keypad, and bending the spacer to an angle sufficient to allow the keypad to fit within the case while the spacer is between the button and the switch.

Preferred embodiments are given in the dependent claims.

FIG. 1 is a diagram showing one type of mobile communication terminal according to the related art;

FIG. 2 is a diagram showing a cross-sectional view of the terminal of Fig. 1 cut along a section line A-A';

FIG. 3 is a diagram showing an enlarged cross-sectional view of a portion B in FIG. 2;

FIG. 4 is a diagram showing a partial cross-sectional view of another mobile communication terminal;

FIG. 5 is a diagram showing a view of a keypad of a mobile terminal according to an embodiment of the present invention;

FIG. 6 is a diagram showing a cross-sectional view of the mobile communication terminal of Fig. 5; and

FIG. 7 is a diagram showing steps included in one embodiment of a method of assembling a mobile communication terminal in accordance with the present invention.

FIG. 8 is a diagram showing a cross-sectional view of how an elastic member used in accordance with one or more embodiments of the present invention may be partially distorted or compressed after assembly.

According to an embodiment of the present invention, a function key switch may include a button (or function key) having a top which may protrude through a key hole formed in a case of an electronic device. In order to reduce or eliminate a clearance gap between the button and a corresponding switch, a spacer is positioned between the button and switch. The spacer may be made from an elastic or rigid material depending upon the application, and the switch may be a tact switch which carries out a switch operation in response to a force applied by the button when pushed by a user's finger. Other types of switches may be used if desired. A keypad may incorporate the function key switch, and an electronic device may incorporate either the function key switch alone or the keypad. The electronic device may be a mobile communications terminal or any other type of device which includes or otherwise operates using at least one function key. For illustrative purposes, the following embodiments are discussed in the context of a mobile terminal.

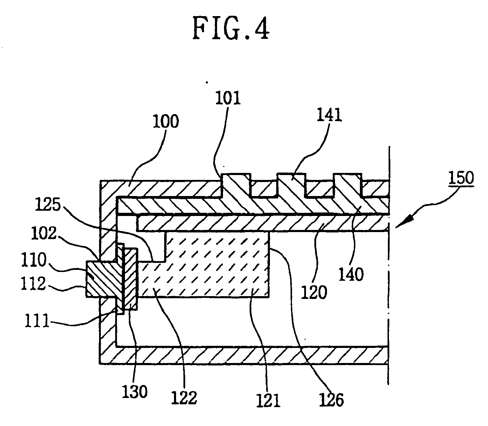

FIG. 4, shows a portion of a mobile terminal which includes a spacer in the form of an elastic members 130 inserted between a button 110 and one end 125 of a tact switch 121. In this embodiment, the button is installed on one side of a case 100 of the terminal and thus is referred to as a side button hereinafter. Another end 126 of the tact switch is attached to a printed-circuit board 120 mounted inside the case. During installation, the side button is inserted in a side button hole 102, so that a top 112 and a bottom 111 of the side button protrude outwardly and inwardly from the case respectively. End 126 of the tact switch is attached to the printed-circuit board 120 so that a nose 122 of the switch confronts bottom 111 of the side button with a predetermined interval.

The elastic member 130 is inserted between the bottom of the side button and the nose of the tact switch. Nose 122 of the tact switch may therefore be used to support the bottom of the side button with the elastic member 130 positioned therebetween. The elastic member 130 may be formed from a variety of materials including soft rubber or silicon in order to provide cushion.

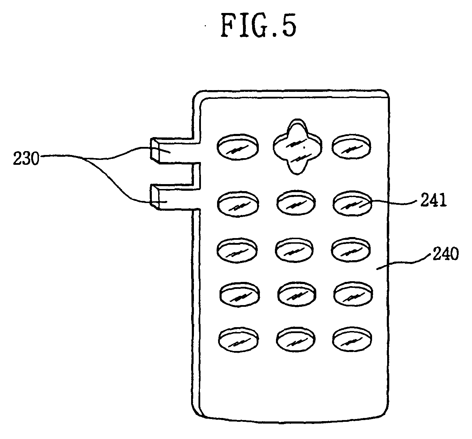

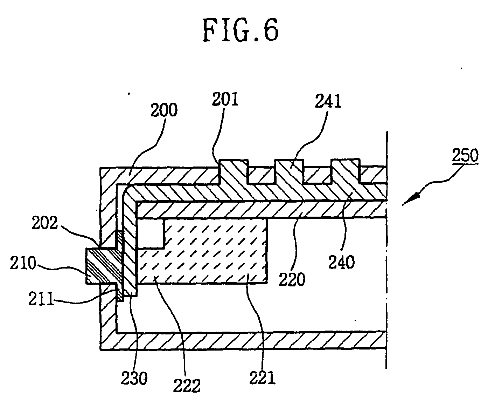

FIG. 5 shows an embodiment of the present invention. In this embodiment, spacers 230 are formed to protrude from one side of a keypad 240 installed inside a case 200. Tops of key buttons 241 protrude through key button holes 201 formed at a front part of the case. The spacers, which are preferably elastic members, may be made of the same material as the keypad, and if so the spacers and keypad may have a unitary construction. Alternatively, the elastic members may be connected or affixed to the side of the keypad using any conventional means of attachment, and/or the elastic members may be made from a material different from the keypad. Also, while two spacers are shown, the present invention may include only one spacer or three or more spacers in alternative embodiments. In order to extend between the side button 210 and nose 222 of the tact switch, the spacers fold down in this embodiment. Depending upon the orientation of the function keys 241 on the keypad relative to the button 210 (Fig. 6), the spacers may remain even with the keypad. The keypad 240 and spacers 230 may be formed, for example, by injection molding using a soft silicon material in the unitary construction case.

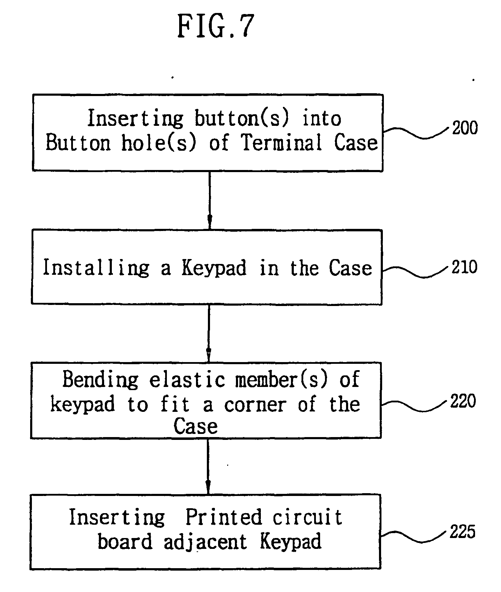

FIG. 6 shows a cross-sectional view of a mobile terminal according to the above embodiment of the present invention, and FIG. 7. shows steps included in a method for assembling the terminal of this embodiment. Here, the spacer(s) are formed as one body with the key pad 240. In assembling this terminal, first, side button 210 is inserted into side button hole 202 formed in one side of the case 200. (Block 200). In this position, the top of the side button protrudes from one side of the case, and the bottom of the button protrudes inside the case. Next, keypad 240 is installed inside the case so that tops of the key buttons 241 protrude through the key button holes 201 formed in the front part of the case (Block 210). A spacer (e.g., an elastic member) 230 of the keypad is then bent to fit a corner of the case, so that one face of the elastic member comes into contact with the bottom 211 of the side button 210 (Block 220). In a next step, printed-circuit board 220 is installed inside the case, so as to be positioned and/or adhered closely to a rear face of the keypad 240 in such a manner that nose 222 of tact switch 221 contacts the other face of spacer 230 (Block 225).

In the above-assembled present invention, nose 222 of the tact switch preferably supports the bottom of the side button and the spacer preferably has a thickness which leaves no gap between the switch and button. The side button 210 therefore does not move freely even if the terminal 250 vibrates by an external force or a vibration motor (not shown in the drawing) installed in the terminal 250. If desired, the spacer may have a thickness which is less than the clearance gap between the switch and button. Furthermore, as in all embodiments described herein, the spacer may be made from an elastic or rigid material.

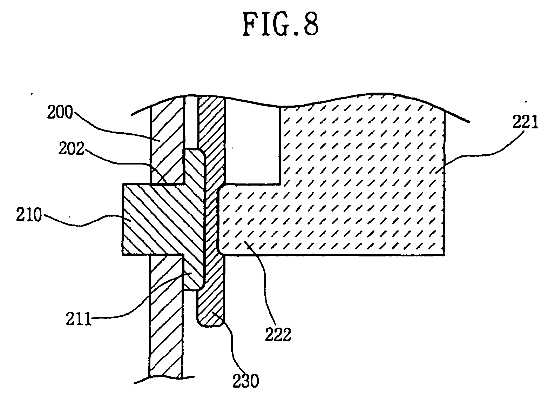

Also, in any of the foregoing embodiments the spacer of the present invention, illustratively shown by elastic member 230 in FIG. 8, may be transformed by compression to fit within the gap between the bottom of the side button and the nose of the tact switch. This may be performed even if the interval is somewhat narrower than the thickness of the elastic member, or even when no clearance gap exists between the button and switch and it is desired to displace the button and switch to create a gap for purposes of accommodating a spacer therebetween. In this case, the pressure applied by the compressive transformation is absorbed by the spacer when made from an elastic material. In this arrangement, the nose of the tact switch may not be pushed even if the elastic spacer is transformed by compression to some extent.

Accordingly, the present invention fills the gap between a button and a tact switch with a spacer which may be an elastic member. This spacer provides an excellent cushion for button pushing and also prevents the button from moving freely and making noise when vibration is applied, such as when a vibration motor of a mobile terminal is activated. Moreover, feeling of use is improved when the button is pressed as a result of the reduction or elimination of the clearance gap and/or the cushion provided by the spacer.

The foregoing embodiments are merely exemplary and are not to be construed as limiting the present invention. The present teachings can be readily applied to other types of apparatuses. Also, the description of the present invention is intended to be merely illustrative, and not to limit the scope of the claims. Many alternatives, modifications, and variations will be apparent to those skilled in the art.

For example, while the embodiments of the invention have been described as providing a cushion for and reducing a clearance between a side button and a terminal casing, those skilled in the art can appreciate that the elastic members of the present invention may be used to cushion top surface buttons or any other button of a communications terminal, including not only hand sets but also PDAs, computers, or other types of electronic devices. Also, whole members 130 and 230 have been described as having elastic properties, these members may alternatively be made rigid materials if desired.

## Claims

1. A terminal, comprising:
a keypad (240),
a switch (221) separate from the keypad (240),
a button (210) confronting the switch (221) so as to operate the switch by a force exerted on the button (210),
**characterized by** a spacer (230) extending between the button (210) and the switch (221), the spacer (230) being connected to the keypad (240).

2. The terminal of claim 1, further comprising:
a case (200), wherein the button (210) at least partially extends through the case.

3. The terminal of claim 2, wherein the button (210) at least partially extends through a side of the case (200).

4. The terminal of claim 1, wherein the switch (221) is a tact switch.

5. The terminal of claim 1, further comprising:
a circuit layer (220),
wherein a first end (222) of the switch (221) is adjacent the spacer (230) and a second end of the switch (221) is adjacent the circuit layer (220).

6. The terminal of claim 1, wherein the spacer (230) is made from an elastic material.

7. The terminal of claim 1, wherein the spacer (230) is made from a rigid material.

8. The terminal of claim 1, wherein a thickness of the spacer (230) at rest is greater than a distance between the switch (221) and button (210).

9. The terminal of claim 1, wherein the spacer (230) is compressed between the switch (221) and button (210).

10. The terminal of claim 1, wherein the spacer (230) and keypad (240) are formed of a unitary construction.

11. The terminal of claim 1, wherein the spacer (230) and keypad (240) are made of a same material.

12. The terminal of claim 1, wherein the spacer (230) and keypad (240) are made of different materials.

13. The terminal of claim 1, wherein the spacer (230) is connected at an angle relative to the keypad (240).

14. The terminal of claim 13, wherein the angle is at least substantially a right angle.

15. The terminal of claim 1, wherein the spacer (230) is made from a soft rubber or silicon material.

16. A method for making a terminal, comprising:
providing a case (200) having at least one button (210),
**characterized by**:
providing a keypad (240) having connected thereto a spacer (230),
placing the spacer (230) between the button (210) and a switch (221) separate from the keypad (240),
bending the spacer (230) to an angle sufficient to allow the keypad (240) to fit within the case (200) while the spacer (230) is between the button (210) and switch (221).

17. The method of claim 16, wherein the button (210) is located along a side of the terminal.

18. The method of claim 16, wherein the spacer (230) is made from an elastic material.

19. The method of claim 16, wherein the spacer (230) is made from a rigid material.

## Patentansprüche

1. Endgerät, mit:
einer Tastatur (240),
einem von der Tastatur (240) getrennten Schalter (221),
einem Druckknopf (210), der dem Schalter (221) gegenüber liegt, um den Schalter durch eine auf den Druckknopf (210) ausgeübte Kraft zu betätigen,
**gekennzeichnet durch** einen Distanzhalter (230), der sich zwischen dem Druckknopf (210) und dem Schalter (221) erstreckt, wobei der Distanzhalter (230) mit der Tastatur (240) verbunden ist.

2. Endgerät nach Anspruch 1, ferner aufweisend:
ein Gehäuse (200), wobei sich der Druckknopf (210) zumindest teilweise durch das Gehäuse erstreckt.

3. Endgerät nach Anspruch 2, bei dem sich der Druckknopf (210) zumindest teilweise durch eine Seite des Gehäuses (200) erstreckt.

4. Endgerät nach Anspruch 1, bei dem der Schalter (221) ein Tastschalter ist.

5. Endgerät nach Anspruch 1, ferner aufweisend:
eine Schaltungschicht (220),
wobei ein erstes Ende (222) des Schalters (221) dem Distanzhalter (230) benachbart ist und ein zweites Ende des Schalters (221) der Schaltungschicht (220) benachbart ist.

6. Endgerät nach Anspruch 1, bei dem der Distanzhalter (230) aus einem elastischen Material besteht.

7. Endgerät nach Anspruch 1, bei dem der Distanzhalter (230) aus einem starren Material besteht.

8. Endgerät nach Anspruch 1, bei dem eine Dicke des Distanzhalters (230) im Ruhezustand größer als ein Abstand zwischen dem Schalter (221) und dem Druckknopf (210) ist.

9. Endgerät nach Anspruch 1, bei dem der Distanzhalter (230) zwischen dem Schalter (221) und dem Druckknopf (210) zusammengedrückt ist.

10. Endgerät nach Anspruch 1, bei dem der Distanzhalter (230) und die Tastatur (240) als einstückige Konstruktion gebildet sind.

11. Endgerät nach Anspruch 1, bei dem der Distanzhalter (230) und die Tastatur (240) aus demselben Material bestehen.

12. Endgerät nach Anspruch 1, bei dem der Distanzhalter (230) und die Tastatur (240) aus unterschiedlichen Materialien bestehen.

13. Endgerät nach Anspruch 1, bei dem der Distanzhalter (230) unter einem Winkel mit der Tastatur (240) verbunden ist.

14. Endgerät nach Anspruch 13, bei dem der Winkel ein zumindest im Wesentlichen rechter Winkel ist.

15. Endgerät nach Anspruch 1, bei dem der Distanzhalter (230) aus einem weichen Gummimaterial oder einem Silikonmaterial besteht.

16. Verfahren zum Herstellen eines Endgeräts, umfassend:
Bereitstellen eines Gehäuses (200) mit zumindest einem Druckknopf (210),
**gekennzeichnet durch**:
Bereitstellen einer Tastatur (240), mit dem ein Distanzhalter (230) verbunden ist, Platzieren des Distanzhalters (230) zwischen dem Druckknopf (210) und einem von der Tastatur (240) getrennten Schalter (221), und
Biegen des Distanzhalters (230) in einen Winkel, der dazu ausreicht, dass die Tastatur (240) in das Gehäuse (200) passt, während sich der Distanzhalter (230) zwischen dem Druckknopf (210) und dem Schalter (221) befindet.

17. Verfahren nach Anspruch 16, bei dem der Druckknopf (210) entlang einer Seite des Endgeräts angeordnet ist.

18. Verfahren nach Anspruch 16, bei dem der Distanzhalter (230) aus einem elastischen Material gemacht ist.

19. Verfahren nach Anspruch 16, bei dem der Distanzhalter (230) aus einem starren Material gemacht ist.

## Revendications

1. Un terminal, comprenant :
- un clavier (240),
- un interrupteur (221) séparé du clavier (240),
- une touche (210) agissant sur l'interrupteur (221) de manière à faire fonctionner l'interrupteur grâce à une force exercée sur la touche (210),
- **caractérisé par** un espaceur (230) s'étendant entre la touche (210) et l'interrupteur (221), l'espaceur (230) étant connecté au clavier (240).

2. Le terminal selon la revendication 1, comprenant en outre :
un boitier (200), où la touche (210) s'étend au moins partiellement à travers le boitier.

3. Le terminal selon la revendication 2, où la touche (210) s'étend au moins partiellement à travers un côté du boitier (200).

4. Le terminal selon la revendication 1, où la touche (211) est une touche contact.

5. Le terminal selon la revendication 1, comprenant en outre
- une couche de circuit (220),
- où une première extrémité (222) de l'interrupteur (221) est adjacente à l'espaceur (230) et une deuxième extrémité (222) de l'interrupteur (221) est adjacente à la couche de circuit (220).

6. Le terminal selon la revendication 1, où l'espaceur (230) est fait d'un matériau élastique.

7. Le terminal selon la revendication 1, où l'espaceur (230) est fait d'un matériau rigide.

8. Le terminal selon la revendication 1, où une épaisseur de l'espaceur (230) au repos est supérieure à la distance entre l'interrupteur (221) et la touche (210).

9. Le terminal selon la revendication 1, où l'espaceur (230) est compressé entre l'interrupteur (221) et la touche (210).

10. Le terminal selon la revendication 1, où l'espaceur (230) et le clavier (240) sont formés par une construction unitaire.

11. Le terminal selon la revendication 1, où l'espaceur (230) et le clavier (240) sont faits du même matériau.

12. Le terminal selon la revendication 1, où l'espaceur (230) et le clavier (240) sont faits de différents matériaux.

13. Le terminal selon la revendication 1, où l'espaceur (230) est connecté à un angle relatif au clavier (240).

14. Le terminal selon la revendication 13, où l'angle est au moins essentiellement un angle droit.

15. Le terminal selon la revendication 1, où l'espaceur (230) est fait d'un caoutchouc souple ou d'un matériau en silicium.

16. Un procédé pour fabriquer un terminal, comprenant :
- la mise à disposition d'un boitier (200) ayant au moins une touche (210),
- **caractérisé par**
- la mise à disposition d'un clavier (240) ayant un espaceur (230) connecté audit clavier,
- le placement de l'espaceur (230) entre la touche (210) et l'interrupteur (221) séparé du clavier (240),
- le pliage de l'espaceur (230) à un angle qui suffit à installer le clavier (240) dans le boitier (200) alors que l'espaceur (230) se trouve entre la touche (210) et l'interrupteur (221).

17. Le procédé selon la revendication 16, où la touche (210) est située le long d'un côté du terminal.

18. Le procédé selon la revendication 16, où l'espaceur (230) est fait d'un matériau élastique.

19. Le procédé selon la revendication 16, où l'espaceur (230) est fait d'un matériau rigide.
